# EUROPÄISCHE PATENTSCHRIFT

(11) **EP 2 994 283 B1**
(45) Veröffentlichungstag und Bekanntmachung des Hinweises auf die Patenterteilung: **21.09.2016**
(21) Anmeldenummer: 14708527.8
(22) Anmeldetag: 28.02.2014
(51) Int. Cl.: B28B 23/00, C04B 26/02, C04B 26/28, C04B 40/06, E04G 21/20, C04B 28/02, C04B 40/00, C04B 41/45

(54) **TROCKENMÖRTELPLATTE SOWIE VERFAHREN ZU DEREN HERSTELLUNG**
DRY MORTAR PANEL AND METHOD FOR THE PRODUCTION THEREOF
PLAQUE DE MORTIER SEC ET PROCÉDÉ DE LA FABRICATION DE LADITE PLAQUE

(30) Priorität: 07.05.2013 DE 102013007800
(43) Veröffentlichungstag der Anmeldung: 16.03.2016
(73) Patentinhaber: Franken Maxit Mauermörtel GmbH & Co., 95359 Kasendorf (DE); Johann Bergmann GmbH & Co., 95359 Azendorf (DE)
(72) Erfinder: SCHARFE, Friedbert, 95359 Kasendorf (DE); GROPPWEIS, Sebastian, 95349 Thurnau (DE)
(74) Vertreter: Patent- und Rechtsanwälte Dr. Solf & Zapf
(86) Internationale Anmeldenummer: PCT/EP2014/053999
(87) Internationale Veröffentlichungsnummer: WO 2014/180582

(56) Entgegenhaltungen:
- EP-A1- 0 005 814
- WO-A1-91/18842
- DE-A1- 1 954 160
- DE-A1- 2 511 097
- US-A- 5 843 544
- US-A1- 2012 047 833
- Alexander Hartmann: "Mörtelband - Revolution am Bau", rent a scientist, 18. März 2010 (2010-03-18), XP055117803, Gefunden im Internet: URL:http://www.rent-a-scientist.com/news/1 51-moertelband-revolution-am-bau.html [gefunden am 2014-05-13]

## Beschreibung

Die vorliegende Erfindung betrifft eine Trockenmörtelplatte zur Herstellung eines Frischmörtels zur deckelnden Dünnbettvermörtelung von Wandbildnern wie z.B. Hochlochplanziegeln, sowie ein Verfahren zur Herstellung einer derartigen Trockenmörtelplatte.

Trockenmörtel sind vorfabrizierte Trockenmischungen (sogenannte Werkmörtel), bestehend aus mineralischen Bindemitteln (Zement, Kalk oder Gips), Gesteinskörnung, Zusatzstoffen und Zusatzmitteln, die auf der Baustelle nur noch mit Wasser angerührt werden müssen und damit gebrauchsfertig sind.

Die DE 25 11 097 A1 offenbart ein mit Wasser aktivierbares Band oder einen mit Wasser aktivierbaren Streifen. Dieses/Dieser weist ein Fasermaterial oder ein geschäumtes Kunststoffmaterial, das mit einer mit Wasser reaktiven zementartigen Substanz, die mit Wasser unter Bildung einer gehärteten Masse reagiert, imprägniert ist, auf. Gemäß der DE 25 11 097 A1 ist die zementartige Substanz mittels eines Bindemittels verfestigt, wobei es sich beispielsweise um einen natürlichen oder synthetischen Kautschuk handelt. Es kann zudem ein Verdickungsmittel als zusätzliches Bindemittel enthalten sein, wobei es sich zum Beispiel um Cellufoseäther handeln kann. Im Rahmen eines Ausführungsbeispiels offenbart die DE 25 11 097 A1, dass 27 Gew.% GlasMikrokügelchen der Firma Fillite Ltd. in Kombination mit Styrol/Butadien-Kautschuk als organisches Bindemittel verwendet werden.

Die DE 1 954 160 A1 offenbart eine Mörtelplatte, welche eine Trockenmörtelmischung aus Zement, Kalk und Mörtelsand aufweist. Die Trockenmörtelmischung ist mittels eines wasserlöslichen Kunstoffs verfestigt. Nach dem Auflegen auf eine Steinschar wird der Trockenmörtel durch Zugabe von Wasser zum hydraulischen Abbinden gebracht.

Aus dem Artikel "Mörtelband - Revolution am Bau", rent-a-scientist, 18. März 2010 von Alexander Herrmann geht ein Mörtelband oder eine Mörtelrolle umfassend eine Trägerschicht und darauf aufgebrachten trockenen Zement und ein Klebemittel hervor.

Die EP 0 005 814 A1 offenbart ein Mörtelband enthaltend einen Zuschlag aus Wirr-, Spinn- oder Nadelvlies und ein hydrophiles Polymer als Klebemittel, welches mit dem trockenen Mörtel in Bandform gepresst wird.

Die EP 2 336 096 A1 offenbart gepresste Trockenmörtelformkörper, welche in Form von Briketts oder einem Granulat vorliegen, wobei als Presshilfsmittel CSH-Granulat, Perlit, Vermiculit, Bims und Blähton verwendet werden können. Die Trockenmörtelformkörper weisen immer ein Sprengmittel auf, welches dazu dient, bei Wasserzutritt die Trockenmörtelformkörper aufzusprengen. Die gepressten Trockenmörtelformkörper werden als Schüttung in einen Behälter gegeben, in welchen die zugehörige Wassermenge zugegeben wird. Die Trockenmörtelformkörper zerfallen dabei bei Wasserzugabe.

Aus der DE 10 2004 033 945 A1 geht ein gattungsgemäßes Mörtelband aus Trockenmörtel zum Verkleben von Mauersteinen, Fliesen oder dergleichen hervor. Das Mörtelband umfasst ein Trägerband und eine darauf aufgebrachte trockene Mischung aus Zementmörtel und einem Bindemittel, wobei das Bindemittel eine wasserlösliche Matrix mit einem Schmelzpunkt oberhalb 40°C ist, ausgewählt aus den Gruppen organische Polymere, hydratisierte Salze, Carbonsäuren und deren Salzen, hydrophobe Stoffe in Verbindung mit hydrophilierenden Substanzen sowie Zucker oder Harnstoff. Dabei ist die auf das Trägerband aufgebrachte Mischung durch Wärmebehandlung mit diesem verbunden und durch nachfolgende Abkühlung verfestigt. Die Mischung kann auch beidseits des Trägerbands angeordnet sein. Nach einer bevorzugten Ausführungsform ist die auf dem Trägerband angeordnete Mischung durch in Querrichtung verlaufende Kerben oder Zwischenräume in Segmente etwa gleicher Länge unterteilt. Über die Kerben kann überschüssiges Wasser beim Bewässern ablaufen. Die Herstellung des Mörtelbandes erfolgt durch Aufbringen einer trockenen Mischung aus Zementmörtel und Bindemittel auf ein Trägerband, Wärmebehandlung und nachfolgendes Abkühlen. Gemäß der DE 10 2004 033 945 A1 kann das Mörtelband auch in Form abgelängter, fester Platten vorliegen.

Das bekannte Mörtelband hat sich bewährt. Allerdings wurde im Rahmen der Erfindung festgestellt, dass der Zusammenhalt des Mörtelbandes nicht immer ausreichend gut ist. Das Mörtelband neigt trotz des innenliegenden Trägerbandes teilweise zum Brechen. Zudem neigt das Mörtelband dazu, am Rand abzubröckeln. Auch ist die Abriebfestigkeit nicht ausreichend gut.

Aufgabe der vorliegenden Erfindung ist somit die Bereitstellung einer Trockenmörtelplatte, die zumindest eine mit einem wasserlöslichen Klebemittel verfestigte Trockenmörtelschicht aufweist, wobei die Trockenmörtelplatte einen verbesserten Zusammenhalt und eine verbesserte Festigkeit aufweisen soll. Auch soll gewährleistet werden, dass beim Bewässern alle Bestandteile der Bindemittelmischung ausreichend und gleichmäßig benetzt werden.

Weitere Aufgabe ist die Bereitstellung eines Verfahrens zur Herstellung der Trockenmörtelplatte.

Diese Aufgaben werden durch eine Trockenmörtelplatte gemäß Anspruch 1 sowie ein Verfahren gemäß Anspruch 10 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch einen Längsschnitt durch eine erfindungsgemäße Trockenmörtelplatte gemäß einer ersten Ausführungsform
- Figur 2:: Eine schematische Draufsicht auf die Trockenmörtelplatte gemäß Fig. 1

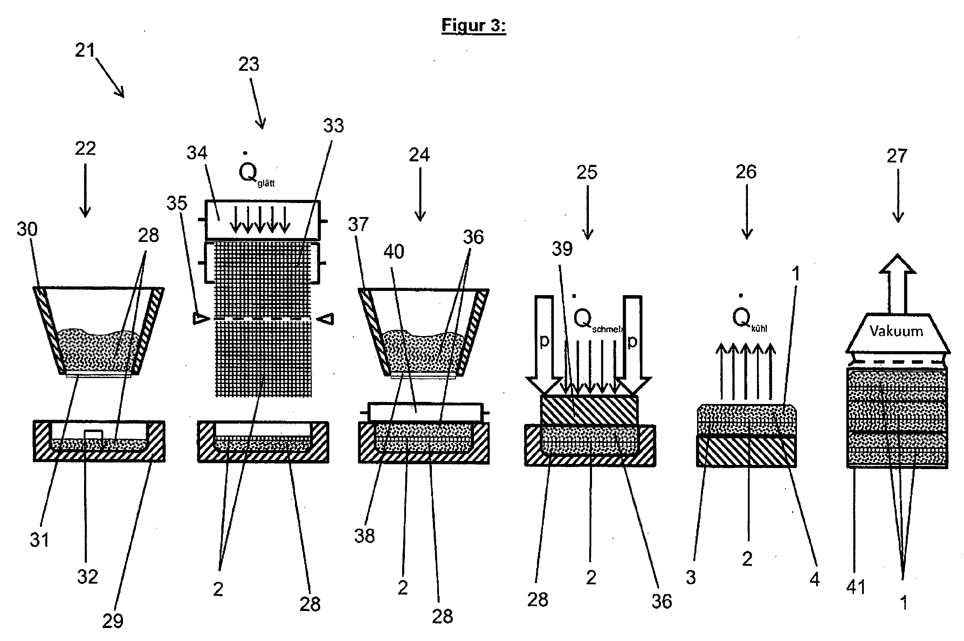

- Figur 3:: Eine rein schematische Darstellung einer erfindungsgemäß verwendeten Vorrichtung

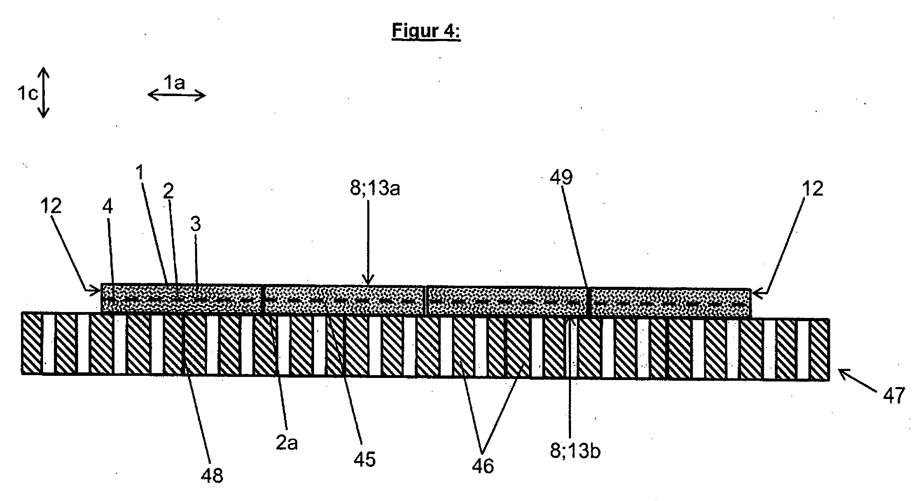

- Figur 4:: Schematisch einen Längsschnitt durch eine Ziegelreihe mit einer darauf angeordneten Reihe aus erfindungsgemäßen Trockenmörtelplatten
- Figur 5:: Schematisch einen Längsschnitt durch zwei übereinander angeordnete Ziegelreihen eines Mauerwerks mit einer dazwischen angeordneten Frischmörtelschicht nach einer ersten Ausführungsform
- Figur 6:: Schematisch einen Längsschnitt durch zwei übereinander angeordnete Ziegelreihen eines Mauerwerks mit einer dazwischen angeordneten Frischmörtelschicht nach einer weiteren Ausführungsform
- Figur 7:: Schematisch einen Längsschnitt durch eine erfindungsgemäße Trockenmörtelplatte gemäß einer weiteren Ausführungsform

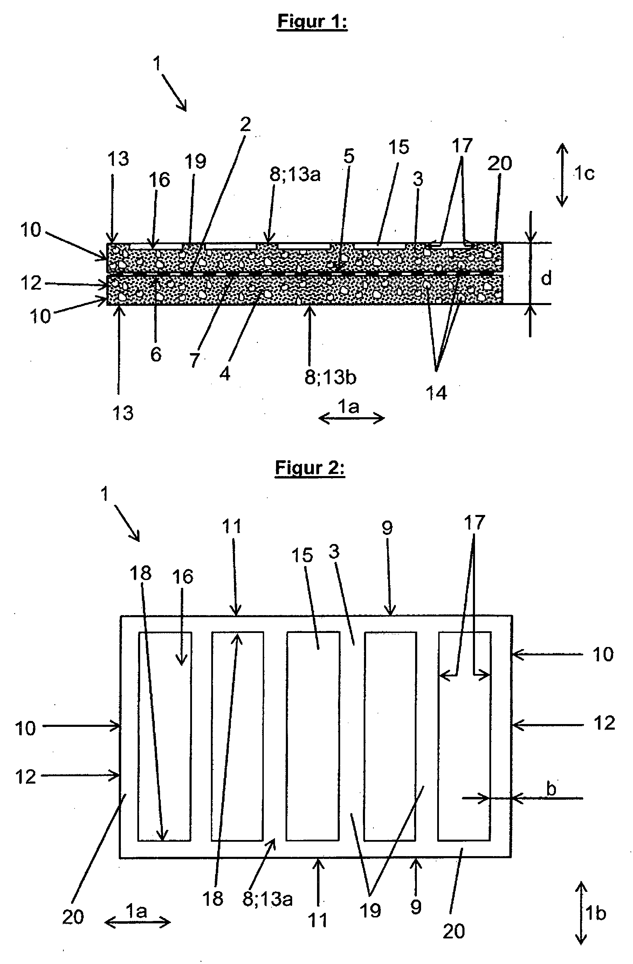

Die erfindungsgemäße, insbesondere quaderförmige, Trockenmörtelplatte 1 gemäß einer ersten Ausführungsform der Erfindung weist ein Trägerband 2 auf, auf dem zumindest einseitig, vorzugsweise beidseits (Fig. 1,2), eine mittels eines wasserlöslichen Klebemittels verfestigte Trockenmörtelschicht 3;4 angeordnet ist. Die Trockenmörtelplatte 1 weist eine Plattenlängsrichtung 1a, eine dazu senkrechte Plattenquerrichtung 1 b und eine sowohl zur Plattenlängsrichtung 1a als auch zur Plattenquerrichtung 1b senkrechte Plattenhöhenrichtung bzw. -dickenrichtung 1c auf.

Bei dem, insbesondere rechteckigen, Trägerband 2 handelt es sich um ein, insbesondere textiles, Flächengebilde. Vorzugsweise handelt es sich bei dem Trägerband 2 um ein Gewebe und/oder Gewirke und/oder ein Vlies und/oder ein Gestricke. Das Trägerband 2 besteht vorzugsweise aus Baumwollfasern und/oder Polyesterfasern und/oder Glasfasern und/oder Carbonfasern und/oder Basaltfasern. Insbesondere handelt es sich um ein einlagiges Gewebe (2D-Gewebe) oder eine mehrlagiges Gewebe, dessen einzelne Gewebelagen vernäht sind, aber voneinander beabstandet sind (3D-Gewebe). Zudem weist das Trägerband 2 eine erste Trägerbandoberseite 5 und eine dieser gegenüberliegende, zweite Trägerbandoberseite 6 auf. Die beiden Trägerband-Oberseiten 5;6 liegen sich in Plattendickenrichtung 1c gegenüber. Dabei weist das Trägerband 2 über seine gesamte flächenmäßige Erstreckung gesehen Durchbrüche bzw. Löcher 7 auf, die von der ersten zur zweiten Trägerbandoberseite 5;6 durchgehen. Im Falle des Gewebes handelt es sich bei den Löchern 7 z.B. um die Zwischenräume zwischen den Kett- und Schussfäden. Die Löcher 7 weisen vorzugsweise einen Querschnitt von 2 mm x 2 mm bis 50 mm x 50 mm, bevorzugt 4 mm x 4 mm bis 10 mm x 10 mm, auf. Bei großen Maschenweite weisen die Trockenmörtelmischungen vorzugsweise eine Bewehrung in Form von Einzelfasern auf.

Wie bereits erläutert ist sowohl auf der ersten Trägerbandoberseite 5 als auch auf der zweiten Trägerbandoberseite 6 jeweils zumindest eine Trockenmörtelschicht 3;4 angeordnet. Das Trägerband 2 ist zumindest einseitig, vorzugsweise beidseits durch zumindest eine Trockenmörtelschicht 3;4 abgedeckt. Das Trägerband 2 ist somit zwischen den beiden Trockenmörtelschichten 3;4 angeordnet. Die beiden Trockenmörtelschichten 3;4 liegen sich in Plattendickenrichtung 1c gegenüber. Dabei durchdringen die beiden Trockenmörtelschichten 3;4 vorzugsweise die Löcher 7 in dem Trägerband 2 und sind dadurch miteinander und mit dem Trägerband 2 verbunden.

Die, insbesondere quaderförmigen, Trockenmörtelschichten 3;4 weisen jeweils eine dem Trägerband 2 abgewandte, äußere Schichtoberseite 8, sowie zwei sich gegenüberliegende und zueinander parallele Schichtseitenkanten 9 und zwei sich gegenüberliegende, zu den Schichtseitenkanten 9 senkrechte Schichtstirnkanten 10 auf. Die Schichtseitenkanten 9 und die Schichtstirnkanten 10 der ersten und zweiten Trockenmörtelschicht 3;4 schließen dabei jeweils vorzugsweise paarweise bündig miteinander ab und bilden Plattenseitenkanten 11 bzw. Plattenstirnkanten 12 der Trockenmörtelplatte 1. Und die beiden äußeren Schichtoberseiten 8 bilden jeweils eine Plattenoberseite 13a;b der Trockenmörtelplatte 1. Des Weiteren erstrecken sich die Schichtseitenkanten 9 und somit die Plattenseitenkanten 11 parallel zur Plattenlängsrichtung 1a und die Schichtstirnkanten 10 und die Plattenstirnkanten 12 erstrecken sich parallel zur Plattenquerrichtung 1b.

Die Trockenmörtelschichten 3;4 bestehen jeweils aus einer Trockenmörtelmischung, die mittels eines wasserlöslichen, schmelzbaren Klebemittels verfestigt ist. Die Trockenmörtelmischung besteht in an sich bekannter Weise aus einem mineralischen, insbesondere hydraulischen, Bindemittel, bevorzugt Zement, insbesondere Portlandzement, und/oder Kalk, sowie Zuschlagstoffen und gegebenenfalls Zusatzstoffen, z.B. Gesteinsmehl und/oder Flugasche und/oder Fasern, und/oder Zusatzmitteln. Insbesondere weist die Trockenmörtelmischung als Zusatzmittel ein Polysaccharid-Verdickungsmittel und einen mineralischen Verdicker gemäß DE 199 16 117 A1 auf, um nach dem Anmachen eine folienartige Konsistenz des Frischmörtels zu erhalten.

Bei dem Klebemittel handelt es sich wie bereits erläutert um einen wasserlöslichen, erhärteten Schmelzklebstoff. Das Klebemittel bildet eine Feststoff-Klebematrix, welche die einzelnen Bestandteile der Trockenmörtelmischung miteinander und mit dem Trägerband 2 verbindet. Die Verbindung erfolgt dabei durch Aufschmelzen und anschließendes Abkühlen des Klebemittels, worauf weiter unten näher eingegangen wird. Infolgedessen ist das Klebemittel mit den Bestandteilen der Trockenmörtelmischung und dem Trägerband 2 verschmolzen bzw. verbacken. Vorzugsweise weist das Klebemittel als Hauptbestandteil eine wasserlösliche Komponente auf, ausgewählt aus den Gruppen organische Polymere, hydratisierte Salze, Carbonsäuren und deren Salze, hydrophobe Stoffe in Verbindung mit hydrophilierenden Substanzen, sowie Zucker oder Harnstoff, wobei diese wasserlösliche Komponente einen Schmelzpunkt zwischen 30°C und 160°C hat. Bezüglich der weiteren möglichen Zusammensetzungen des Klebemittels wird auf die DE 10 2004 033 945 B4 verwiesen.

Im Rahmen der Erfindung wurde nun überraschenderweise heraus gefunden, dass die Festigkeit und der Zusammenhalt der Trockenmörtelschichten 3;4 durch einen hohen Anteil an offenporigem und geschlossenporigem Leichtzuschlag (leichte Gesteinskörnung) erheblich verbessert werden kann. Unter Zuschlag (Gesteinskörnung) versteht man ein körniges Material für die Verwendung im Bauwesen. Gesteinskörnungen werden nach ihrer Herkunft, ihrem Gefüge, der Korngröße sowie der Kornrohdichte eingeteilt und können natürlich, industriell hergestellt oder rezykliert sein. Grundsätzlich unterscheidet man anhand der Kornrohdichte ρ_{Rg}, bestimmt nach DIN 4226, zwischen Leichtzuschlag (leichter Gesteinskörnung) (ρ_{R9} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³). Erfindungsgemäß enthalten die Trockenmörtelschichten 3;4 in der Summe jeweils 5 bis 35 Gew.%, bevorzugt 10 bis 25 Gew.% offenporigen und geschlossenporigen Leichtzuschlag, bezogen auf die Trockenmasse der Trockenmörtelschichten 3;4. Der Leichtzuschlag besteht bekanntermaßen aus einzelnen, ungebrochenen und/oder gebrochenen, Leichtzuschlagkörnern 14, die jeweils offenporig oder geschlossenporig ausgebildet sind und aus natürlichen und/oder künstlich hergestellten, insbesondere mineralischen, Stoffen bestehen.

Unterschieden wird zwischen geschlossenporigen leichten Gesteinskörnungen (geschlossenporiger Leichtzuschlag) wie Blähton und Blähglas mit geschlossenporigen Leichtzuschlagkörnern und offenporigen leichten Gesteinskörnungen (offenporiger Leichtzuschlag) wie Bims, Vermiculit und Blähperlit mit offenporigen Leichtzuschlagkörnern wie folgt: Die durch einen Bläh- bzw. Sinterprozess hergestellten geschlossenporigen Leichtzuschlagkörner weisen im Inneren ein stark vernetztes Porensystem und eine vergleichsweise dichte Sinterhaut auf. Die Sinterhaut weist kapillar hoch aktive Sinterporen mit einem Durchmesser von ca. 0,01 bis 40 µm auf. Auch geschlossenporige Leichtzuschlagkörner sind also an der Kornoberfläche nicht vollständig geschlossen. Geschlossenporige Leichtzuschlagkörner saugen am Anfang sehr schnell. Dann nimmt die Wasseraufnahme mit der Zeit stark ab. Offenporige Leichtzuschlagkörner hingegen weisen eine gleichmäßig verteilte, hohe Porosität über den gesamten Kornquerschnitt auf. Sie besitzen ein sehr hohes kapillares Saugvermögen und sind innerhalb weniger Sekunden bis Minuten wassergesättigt.

Aufgrund ihrer Porosität weisen vor allem offenporige Leichtzuschlagkörner 14 sehr geringe Korndruckfestigkeiten auf. Vorzugsweise liegt deren Körndruckfestigkeit bei 0,01 N/mm² bis 2 N/mm², bevorzugt 0,01 N/mm² bis 1 N/mm². Die Korndruckfestigkeit hängt insbesondre vom eingesetzten Leichtzuschlagstoff ab. Dennoch weist die erfindungsgemäße Trockenmörtelplatte 1 überraschenderweise gute Festigkeitseigenschaften und eine hohe Abriebfestigkeit auf. Es wird vermutet, dass das aufgeschmolzene Klebemittel in die offenen Poren der Leichtzuschlagkörner 14 eindringt und nach dem Erkalten in diesen mechanisch verkrallt ist. Dadurch wird der Zusammenhalt der einzelnen Bestandteile der Trockenmörtelmischung deutlich verbessert, was zu den guten Festigkeitseigenschaften der erfindungsgemäßen Trockenmörtelplatte 1 führt. Die Korndruckfesfigkeit des geschlossenporigen Leichtzuschlags liegt vorzugsweise bei 2 bis 7 N/mm².

Weiterer Vorteil des hohen Anteils an offen- und geschlossenporigem Leichtzuschlag ist zudem, dass eine offene Porosität in der gesamten Trockenmörtelschicht 3;4 erzeugt wird. Dadurch, dass die einzelnen Bestandteile der Trockenmörtelmischungen mittels des Klebemittels zueinander fixiert sind, erzeugen die Leichtzuschlagkörner 14 einen definierten, stabilen Porenraum mit miteinander verbundenen Poren. Somit wird gewährleistet, dass das Anmachwasser durch die gesamte Mörtelplatte 1 durchfließen kann und eine gleichmäßige Benetzung der Bindemittelpartikel erreicht wird. Die Trockenmörtelplatte 1 weist somit eine hohe Saugfähigkeit auf. Damit sind gute und gleichmäßige Festigkeitseigenschaften der aus der Mörtelplatte 1 hergestellten abgebundenen Mörtelschicht gewährleistet. Des Weiteren ist eine wesentlich schnellere Weiterverarbeitung der bewässerten Mörtelplatte 1 (auflegen der nächsten Steinlage) möglich.

Die Saugfähigkeit der Trockenmörtelplatte 1 wurde wie folgt bestimmt: Eine Trockenmörtelplatte 1 wird gewogen und mit der einen Plattenoberseite 13b auf einer glatten, wasserundurchlässigen Unterlage (z.B. Glasscheibe) und positioniert. Aufgebracht wird das Wasser durch eine Pump-Sprühflasche mit Zerstäuber. Das Gewicht des in der Flasche befindlichen Wassers wird erfasst und nach dem Bewässern negativ verwogen. Außerdem muss Verlustwasser aufgefangen werden, welches beim Sprühvorgang eventuell über die Randbereiche der Platte hinweg gesprüht wird und gegenverwogen werden.

Die Trockenmörtelplatte 1 wird von oben mit der Pump-Sprühflasche zyklisch bewässert. Dazu wird die saugfähige Trockenmörtelplatte 1 mit Sprühstößen a ca. 1 mg besprüht. Jedes Bewässerungsintervall ist dann abgeschlossen wenn die Wassermenge komplett von der Trockenmörtelplatte 1 aufgenommen wurde. Dies wird solange wiederholt bis durch einen feinen Wasserfilm auf der Oberfläche klar erkennbar ist (Oberfläche glänzt), dass keine Wasseraufnahme mehr stattfindet. Abschließend muss überprüft werden, dass sich der feine Wasserfilm mindestens 120 s auf der oberen Plattenoberseite 13a hält ohne von der Trockenmörtelplatte 1 aufgenommen zu werden. Gegeben falls muss nachbewässert werden und die Prüfung wiederholt werden. Außerdem ist eine Sichtprüfung der Unterseite zwecks Durchwässerung der Trockenmörtelplatte ratsam zur Beurteilung der Plattenqualität. Dauert die Prüfung länger als 300s muss das Versuchsergebnis verworfen werden und die Prüfung mit einem neuen Probekörper wiederholt werden. Dann wurde das Gewicht des verbrauchten Wassers bestimmt und in Relation zum Plattengewicht gesetzt. Die Saugfähigkeit [Gew.%] der Trockenmörtelplatte 1 wurde bestimmt aus der Wasseraufnahme bezogen auf die gesamte Trockenmasse der Trockenmörtelplatte 1. Die Saugfähigkeit liegt vorzugsweise zwischen 20 und 80 Gew.%, bevorzugt zwischen 40 und 70 Gew.%.

Die Saugfähigkeit der Mörtelplatte 1 wird erfindungsgemäß über die Art des offenporigen und des geschlossenporigen Leichtzuschlags und den Gehalt an offen- und geschlossenporigem Leichtzuschlag eingestellt, je nach Bindemittel und Expositionsgrad (benötigtes Wasser-Zement-Verhältnis). Vorzugsweise handelt es sich bei dem offen- bzw. geschlossenporigen Leichtzuschlag um Perlit oder Vermiculit oder Blähglas oder Hydrosilikate (geschäumtes Wasserglas) oder Blähton oder poröse Sande, Aerogele, Blähschiefer, Bims, Tuff oder Mischungen aus den vorgenannten Leichtzuschlagstoffen. Besonders vorteilhaft ist eine Mischung aus Blähglas, Vermiculit und Perlit. Des Weiteren können die Trockenmörtelschichten 3;4 als Leichtzuschlag Glashohlkugeln, Glasflakes und/oder Polysterol aufweisen.

Dabei spielt für die Einstellung der Saugfähigkeit der Mörtelplatte 1 insbesondere die Porosität der Leichtzuschlagkörner 14 eine Rolle. Diese liegt bei Blähglas bei 88-92 Vol.% bei Perlit bei ca. 95 Vol.% und bei Vermiculit bei 94-96 Vol.%, jeweils bestimmt gemäß DIN 52102. Dabei wurde im Rahmen der Erfindung herausgefunden, dass die Verwendung von geschlossenporigem Leichtzuschlag, insbesondere Blähglas, besonders vorteilhaft ist. Blähglas ist aufgrund seiner Kugelstruktur im Gegensatz zu den anderen Leichtzuschlägen auch im Inneren nicht vollständig offenporig. Allerdings wird durch Mikrorisse nach und nach ein Großteil des Gesamtporenraums zeitverzögert gefüllt. Somit wirkt das Blähglas als Wasserrückhaltesystem, das langsam Wasser aufnimmt und abgibt. Dies ist besonders wichtig wenn die Mörtelplatte 1 auf stark poröse Wandbildner abgestimmt werden muss, die dazu neigen das Wasser aus der Mörtelplatte 1 wegzusaugen (z.B. Bei Kalksandsteinen). Dadurch kann der Abbindevorgang des Zementes durch zu einen zu geringen w/z-Wert gestört werden. Durch den gezielten Einsatz von geschlossenporigem Leichtzuschlag, insbesondere Blähglas, ist somit die Saugfähigkeit und damit die Festigkeit steuerbar. Darüber hinaus hält das Blähglas auch unter Druck relativ gut das Wasser, weist also eine druckstabile Wasseraufnahme auf. Dagegen nehmen offenporige Leichtzuschlagsstoffe das Wasser eher schwammartig auf und geben es unter Druck wieder ab. Aufgrund dessen wird durch den Druck des aufgesetzten Wandbildners eine gewisse Mehrmenge an Wasser aus dem offenporigen Leichtzuschlag freigesetzt. Unter anderem deswegen ist die richtige Zusammensetzung des Leichtzuschlages sehr wichtig. Insbesondere kommt es auf die richtige Zusammensetzung aus offenporigem und geschlossenporigem Leichtzuschlagstoff an. Vorzugsweise enthalten die Trockenmörtelschichten 3;4 deshalb jeweils 1 bis 20 Gew.%, bevorzugt 5 bis 15 Gew.%, geschlossenporigen Leichtzuschlag, bevorzugt Blähglas. Der Rest des Leichtzuschlages besteht aus offenporigem Leichtzuschlagstoff.

Die Trockenrohdichte ρ₀ der Trockenmörtelplatte 1 beträgt vorzugsweise 0,8 bis 1,2 kg/dm³, bevorzugt 0,9 bis 1,1 kg/dm³. Zur Bestimmung der Trocknenrohdichte ρ₀ wurde die Trockenmörtelplatte 1 bei 40°C bis zur Mässenkonstanz getrocknet. Auch die geringe Trockenrohdichte und die hohe Porosität werden durch den Anteil an offen- und geschlossenporigem Leichtzuschlag eingestellt.

Nach einem weiteren, eigenständigen Aspekt der Erfindung weist die Trockenmörtelplatte 1 in zumindest einer der beiden Schichtoberseiten 8 bzw. Plattenoberseiten 13a;b zumindest eine, vorzugsweise mehrere, wannenartige bzw. muldenartige bzw. beckenartige Vertiefungen 15 zur Aufnahme einer definierten Wassermenge bei der Wässerung der erfindungsgemäßen Trockenmörtelplatte 1 auf. Die wannenartigen Vertiefungen 15 dienen als geschlossene Wasserreservoirs bzw. in sich geschlossenes Behältnis zur Speicherung einer definierten Wassermenge, worauf weiter unten näher eingegangen wird. Die wannenartigen Vertiefungen 15 weisen jeweils einen Wannenboden 16 sowie zwei gegenüberliegende Wannenseitenwandungen bzw. Wannenlängswandungen 17 und zwei sich gegenüberliegende Wannenstirnwandungen 18 auf. Die Wannenstirnwandungen 18 erstrecken sich dabei senkrecht zu den Wannenseitenwandungen 16 und parallel zur Plattenlängsrichtung 1a. Die Wannensettenwandungen 17 erstrecken sich parallel zur Plättenquerrichtun 1b. Somit erstrecken sich die Wannenseitenwandungen 17 parallel zu den Plattenstirnkanten 12. Der Wannenboden 16 ist senkrecht zur Plattendickenrichtung 1c. Die wannenartigen Vertiefungen 15 sind zudem in Plattenlängsrichtung 1a zueinander benachbart angeordnet. Insbesondere weist die Trockenmörtelplatte 1 1 bis 15, bevorzugt 5 bis 10, zueinander benachbarte wannenartige. Vertiefungen 15 auf. Zwischen je zwei zueinander benachbarten wannenartigen Vertiefungen 15 ist jeweils eine innere Stegwandung bzw. Zwischenstegwandung 19 vorhanden. Des Weiteren ist jeweils eine äußere, durchgehende, umlaufende Stegwandung bzw. Randstegwandung 20 vorhanden, die die wannenartigen Vertiefungen 15 begrenzt und umgibt und die sich bis zu den beiden Plattenstirnkanten 12 und Plattenseitenkanten 11 erstreckt.

Aufgrund der wannenartigen Vertiefungen 15 und den Stegwandungen 19;20 ist die Plattenoberseite 13a gerippt ausgebildet. Dies verbessert die Stabilität, insbesondere Steifigkeit, der Trockenmörtelplatte 1 überraschenderweise erheblich. Die umlaufende Randstegwandung 20 bewirkt zudem, dass die Trockenmörtelplatte 1 am Rand nicht mehr abbröckelt. Die Randstegwandung 20 stellt eine Materialanhäufung dar und bewirkt im bewässerten Zustand, dass die Randbereiche der Ziegelsteine mit ausreichend Mörtel versorgt werden. Dies steigert die Festigkeit. Außerdem unterstützt die plastisch gewordene bewässerte Randstegwandung 20 eine Ausgleichswirkung. Im Ergebnis ist die Fuge sehr gleichmäßig. Die Randstegwandung 20 weist vorzugsweise dazu eine Breite b (gemessen von der jeweiligen Plattenkante 11 bzw. 12) von 2 bis 50 mm, bevorzugt 5 bis 35 mm, auf. Die Tiefe der Wanne hängt insbesondere vom Expositionsgrad (w/z-Wert DIN 1045) und Bindemittel ab. Die Tiefe der wannenartigen Vertiefungen 15, im Verhältnis zu einer Dicke d der Mörtelplatte 1 beträgt bevorzugt 20 bis 80 %, im Besonderen 30 bis 60 %.

Dabei liegt es selbstverständlich im Rahmen der Erfindung, dass die im Querschnitt u-förmigen wannenartigen Vertiefungen 15 (Fig. 1) nicht rechteckig, sondern rund ausgebildet sind. Auch können die wannenartigen Vertiefungen 15 einen anderen als rechteckigen Grundriss aufweisen.

Die Dicke d, also die Erstreckung in Plattendickenrichtung 1 c, der erfindungsgemäßen Trockenmörtelplatte 1 beträgt vorzugsweise 1,5 bis 100 mm, bevorzugt 2 bis 40 mm, je nachdem ob die Trockenmörtelplatte 1 zur Herstellung einer Dünnbettmörtelschicht oder einer Dickbettmörtelschicht verwendet werden soll.

Im Folgenden wird auf das Verfahren zur Herstellung der erfindungsgemäßen Trockenmörtelplatte 1 eingegangen:

Die im erfindungsgeimäßen Verfahren verwendete Vorrichtung 21 weist eine erste Mörtelauftrageinrichtung 22, eine Trägerbandauflegeinrichtung 23, eine zweite Mörtelauftrageinrichtung 24, vorzugsweise eine Vorheizeinrichtung, eine Presseinrichtung 25, vorzugsweise eine Entformungsvorrichtung, eine Kühlstrecke bzw. Abkühleinrichtung 26, vorzugsweise eine Kontrolleinrichtung, und eine Verpackeinrichtung 27 auf.

Mittels der ersten Mörtelauftrageinrichtung 22 wird eine erste trockene Mischung 28 bestehend aus der Trockenmörtelmischung und dem Klebemittel in Granulat- oder Pulverform für die erste Trockenmörtelschicht 3 mit der profilierten Plattenoberseite 13a in Kassettenformen 29 eingebracht, insbesondere eingestreut. Dazu weist die erste Mörtelauftrageinrichtung 22 einen ersten Vorratsbehälter 30 für die erste trockene Mischung 28 und ein geeignetes Auftragsmittel auf. Bei dem Auftragsmittel handelt es sich z.B. um eine Zellradschleuse 31 oder eine Klappe. Vorzugsweise weist die erste Mörtelauftrageinrichtung 22 zudem ein Abziehband oder dergleichen zum Glätten der Oberfläche der eingestreuten ersten trockenen Mischung 28 auf. Die erste trockene Mischung 28 wird insbesondere auf einen Formenboden 32 der Kassettenformen 29 aufgebracht. Der Formenboden 32 ist vorzugsweise profiliert und weist die Negativform der zu erzeugenden, profilierten Plattenoberseite 13a bzw. Schichtoberseite 8 mit den wannenartige Vertiefungen 15 auf. Die Kassettenformen 29 und auch der erste Vorratsbehälter 30 können zudem beheizt sein.

Wie bereits erläutert, kommt es erfindungsgemäß darauf an, dass die Trockenmörtelschichten 3;4 einen hohen Anteil an offen- und geschlossenporigem Leichtzuschlag enthalten. Dies wird für die erste Trockenmörtelschicht 3 durch eine entsprechende Zusammensetzung der ersten trockenen Mischung 28 gewährleistet. Insbesondere weist die erste trockene Mischung 28 in der Summe einen Anteil von 20 bis 60 Vol.%, bevorzugt 30 bis 50 Vol.%, an offen- und geschlossenporigem Leichtzuschlag auf, bezogen auf gesamte Trockenmasse der Trockenmörtelmischung auf. Der Anteil an geschlossenporigem Leichtzüschlag, insbesondere Blähglas, beträgt dabei vorzugsweise 2 bis 30 Vol.%, bevorzugt 10 bis 25 Vol.%.

Im Folgenden werden zudem bevorzugte Zusammensetzungen der ersten trockenen Mischung 28, bezogen auf die Trockenmasse, angegeben (die einzelnen Komponenten addieren sich zu 100 Vol.%):

| | | **insbesondere** |
|---|---|---|
| | **[Vol.%]** | **[vol.%]** |
| **Mineralisches Bindemittel, insbesondere Portlandzement und/oder Kalkhydrat** | 30-60 | 35-50 |
| **Offen- und geschlossenporiger Leichtzuschlag** | 20-60 | 30-50 |
| **Weitere Zuschlagstoffe, z.B. Natur und Brechsande** | 0-10 | 0-5 |
| **Zusatzstoffe, z.B. Kalksteinmehl und/oder Flugasche und/oder Fasern** | 0-10 | 0-4 |
| **Zusatzmittel, z.B. Wasserrückhaltemittel und/oder Polysaccharid Verdicker und/oder Eutektikbildner wie z.B. Acetate und andere Salze** | 0-10 | 0-6,5 |
| **Klebemittel, z.B. Harnstoff und/oder Zucker und/oder Stärken und/oder thermoplastische Polymere** | 5-30 | 10-20 |

Dabei wurde im Rahmen der Erfindung herausgefunden, dass die Sieblinie der Trockenmörtelmischung, insbesondere des offen- und geschlossenporigen Leichtzuschlages, für die Schaffung eines definierten Porenraums wesentlich ist. Insbesondere weist der offen- und geschlossenporige Leichtzuschlag der ersten trockenen Mischung 28 folgende Korngrößenverteilung, ermittelt anhand des Siebdurchgangs, auf (die einzelnen Komponenten addieren sich zu 100 Gew.%):

| | **Anteil bezogen auf gesamten Gehalt an offen- und geschlossenporigem Leichtzuschlag in der Trockenmörtelmischung** | |
|---|---|---|
| | **[Gew.%]** | |
| **Korngrößen** | | **vorzugsweise** |
| **≤ 0,09 mm** | 0-20 | 0-15 |
| **> 0,09 -0,2 mm** | 0-20 | 0-10 |
| **> 0.2 - 0,63 mm** | 0-100 | 70-95 |
| **> 0,63 - 1,0 mm** | 0-100 | 5-30 |
| **> 1,0 - 2,0 mm** | 0-20 | 0-10 |

Je nach Dicke der Trockenmörtelschichten 3;4 kann auch eine gröbere Körnung verwendet werden. Die bevorzugte Korngrößenverteilung ist dann wie folgt (die einzelnen Komponenten addieren sich wiederum zu 100 Gew.%):

| | **Anteil bezogen auf gesamten Gehalt an offen- und geschlossenporigem Leichtzuschlag in der Trockenmörtelmischung** | |
|---|---|---|
| | **[Gew.%]** | |
| | | **vorzugsweise** |
| **≤ 0,09 mm** | 0-10 | 0-5 |
| **> 0,09 - 0,2 mm** | 0-10 | 0-5 |
| **> 0,2 - 0,63 mm** | 0-20 | 0-5 |
| **> 0,63 - 1,0 mm** | 0-100 | 70-95 |
| **> 1,0 - 2,0 mm** | 0-100 | 5-30 |
| **> 2,0 - 4 mm** | 0-10 | 0-5 |

Zudem weist die erste trockene Mischung 28 vorzugsweise folgende Sieblinie (angegeben ist der Siebrückstand) auf:

| | **Anteil bezogen auf die gesamte Trockenmasse der ersten trockenen Mischung** | |
|---|---|---|
| | **[Gew.%]** | |
| | | **insbesondere** |
| **> 0,09 mm** | 5-50 | 10-30 |
| **> 0,2 mm** | 5-50 | 10-25 |
| **> 0,63 mm** | 0-10 | 0-5 |
| **> 1,0 mm** | 0-10 | 0-5 |

oder, bei gröberer Körnung:

| | **Anteil bezogen auf die gesamte Trockenmasse der ersten trockenen Mischung** | |
|---|---|---|
| | **[Gew.%]** | |
| | | **insbesondere** |
| **> 0,09 mm** | 5-50 | 10-30 |
| **> 0,2 mm** | 5-50 | 5-25 |
| **> 0,63 mm** | 0-25 | 5-25 |
| **> 1,0 mm** | 0-20 | 0-10 |
| **> 2,0 mm** | 0-10 | 0-5 |

Die Trägerbandauflegeeinrichtung 23 ist oberhalb der Kassettenformen 29 angeordnet und dient zum Auflegen des Trägerbandes 2 auf die erste trockene, lockere Mischung 28. Die Trägerbandauflegeeinrichtung 23 weist vorzugsweise eine Vorratsrolle mit einem darauf aufgewickelten endlosen Trägerbandmaterial 33, eine Glätteinrichtung 34 zum Glätten des endlosen Trägerbandmaterials 33, und eine Schneideinrichtung 35 zum Abschneiden des Trägerbandes 2 von dem geglätteten, endlosen Trägerbandmaterial 33 und Mittel zum Auflegen des abgeschnittenen Trägerbandes 2 auf die erste trockene Mischung 28 auf.

Bei der Glätteinrichtung 34 handelt es sich z.B. um zwei beheizte Platten oder Walzen. In der Glätteinrichtung 34 wird das endlose Trägerbandmaterial 33 nach dem Abwickeln von der Vorratsrolle mit Druck und Temperatur beaufschlagt. Es wird somit gebügelt Ohne das Glätten kann es vorkommen, dass das abgeschnittene Trägerband 2 durch das Aufwickeln auf der Vorratsrolle stark gewellt ist. Dies kann zu Problemen führen. Insbesondere ist es schwierig, das abgeschnittene Trägerband 2 an einer definierten Stelle auf der ersten trockenen Mischung 28 zu platzieren. Dies kann die Stabilität der Trockenmörtelplatte 1 beeinträchtigen. Durch das Glätten weist das Trägerband 2 eine gleichmäßige und definierte, reproduzierbare Form auf. Dabei liegt es selbstverständlich auch im Rahmen der Erfindung das Trägerband 2 nach dem Schneiden zu glätten.

Bei der Schneideinrichtung 35 handelt es sich z.B. um eine schwenkbare Klinge oder zwei aufeinander abrollende Schneidrädchen.

Mittels der zweiten Mörtelauftrageinrichtung 24 wird eine zweite trockene Mischung 36 bestehend aus der Trockenmörtelmischung und dem Klebemittel in Granulat- oder Pulverform für die zweite Trockenmörtelschicht 4 auf das Trägerband 2 aufgebracht, insbesondere aufgestreut. Dazu weist die zweite Mörtelauftrageinrichtung 22 einen zweiten Vorratsbehälter 37 für die zweite trockene Mischung 36 und ein geeignetes Auftragsmittel auf. Bei dem Auftragsmittel handelt es sich wiederum z.B. um eine Zellradschleuse 38 oder eine Klappe. Vorzugsweise weist die zweite Mörtelauftrageinrichtung 24 zudem ebenfalls ein Abziehband 40 oder dergleichen zum Glätten der Oberfläche der aufgestreuten zweiten trockenen Mischung 36 auf. Damit ist eine gleichmäßige Materialverteilung in der Kassettenform 29 gewährleistet.

Die zweite trockene Mischung 36 ist von der Zusammensetzung her vorzugsweise identisch mit der ersten trockenen Mischung 28. In diesem Fall kann die zweite trockene Mischung 36 auch mit derselben Mörtelauftrageinrichtung 22 aufgetragen werden wie die erste trockene Mischung 28.

Die vorzugsweise vorhandene Vorheizeinrichtung dient zum Vorheizen der trockenen Mischungen 28;36. Insbesondere werden die trockenen Mischungen 28;36 auf die gleiche Ausgangstemperatur gebracht.

Mittels der Presseinrichtung 25 werden die beiden trockenen Mischungen 28;36 und das dazwischen angeordnete Trägerband 2 gleichzeitig mit Druck und Temperatur beaufschlagt. Vorzugsweise werden mehrere Kassettenformen 29 gleichzeitig beaufschlagt. Dazu weist die Presseinrichtung 25 zumindest eine, insbesondere mehrere, zu den Kassettenformen 29 korrespondierende bzw. passende, beheizte Formendeckel 39 auf. Die Formendeckel 39 werden von oben auf jeweils eine der Kassettenformen 29 aufgesetzt, so dass jeweils eine geschlossene Pressform gebildet wird. In der Pressform werden die trockenen Mischungen 28;36 komprimiert und gleichzeitig derart aufgeheizt, dass das Klebemittel schmilzt. Das flüssige Klebemittel verteilt sich nun in den Mischungen 28;36, verbindet sich mit den Bestandteilen der Trockenmörtelmischungen und dringt dabei teilweise in die Leichtzuschlagkörner 14 ein. Es bilden sich die beiden Trockenmörtelschichten 3;4. Die Verteilung des Klebemittels wird dabei durch das gleichzeitige Aufbringen von Druck deutlich verbessert. Zudem werden sowohl die festen, nicht schmelzbaren Bestandteile der Trockenmörtelmischungen als auch das Klebmittel durch die Löcher 7 im Trägerband 2 durchgedrückt und die beiden Trockenmörtelschichten 3;4 miteinander und mit dem Trägerband 2 verbunden.

Dabei wurde im Rahmen der Erfindung herausgefunden, dass der aufgebrachte Druck nicht zu hoch sein darf. Ansonsten würden die Leichtzuschlagkörner beim Verdichten völlig zerstört werden. Dies würde die Wasserdurchlässigkeit der fertigen Trockenmörtelplatte 1 verschlechtern und zu einer ungenügenden Benetzung der Trockenmörtelmischung beim Bewässern führen. Andererseits führt ein zu niedriger Druck zu einem unzureichenden Zusammenhalt der Trockenmörtelplatte 1. Vorzugsweise liegt der aufgebrachte Druck bei 0,1 bis 20 bar oder bei 0,2 bis 20 bar, bevorzugt bei 2 bis 6 bar. Besonders bevorzugt liegt der Druck bei 0,1 bis 3 bar oder 0,2 bis 3 bar, insbesondere bei 0,5 bis 2,5 bar. Des Weiteren wurde im Rahmen der Erfindung herausgefunden, dass auch die Temperatur einen entscheidenden Einfluss auf die Qualität der hergestellten Trockenmörtelplatte 1 hat. Bei zu geringen Temperaturen wird das Klebemittel nicht ausreichend aktiviert. Die Trockenmörtelplatte 1 hat keinen ausreichenden Zusammenhalt. Bei zu hohen Temperaturen wird das Klebemittel gasförmig und entweicht, was ebenfalls zu einem unzureichenden Zusammenhalt führt. Vorzugsweise liegt die Temperatur deshalb bei 30 bis 250 °C, bevorzugt bei 100 bis 170 °C. Der Pressvorgang dauert dabei vorzugsweise 10 bis 500 s, bevorzugt 10 bis 200 s.

Zudem wurde im Rahmen der Erfindung herausgefunden, dass die Kassettenformen 29 und die Formendeckel 39 eine Antihaftbeschichtung aufweisen sollten, um die Adhäsion zwischen der Kassettenform bzw. dem Formendeckel 39 und der Trockenmörtelplatte 1 zu minimieren und eine rückstandslose Entformung zu gewährleisten. Auch sind Entformungsschrägen wichtig. Vorzugsweise besteht die Antihaftbeschichtung aus einem temperaturbeständigen Kunststoffmaterial, insbesondere aus einem gummiartigen, elastischen Kunststoffmaterial, bevorzugt aus Silikon oder Polyurethan (PU) oder Teflon (PTFE). Auch kann die Antihaftbeschichtung aus einem oxidischen Material, z.B. SiO₂ oder TiO₂ oder einem metallischen Material wie z.B. Chrom oder Alu etc. bestehen. Alternativ zur Antihaftbeschichtung bestehen die Kassettenformen 29 und die Formendeckel 39 aus einem metallischen Material, z.B. Strahl, Aluminium oder Titan, wobei die Trennoberflächen poliert oder schleiftechnisch vergütet sind und vorzugsweise mit einem Trennmittel, insbesondere einem Öl, Fett, Talg und/oder Ruß, versehen sind. Das Trennmittel wird dabei jeweils auf die leeren Kassettenformen 29 und Formendeckel 39 vor dem Schließen aufgebracht.

Nach dem Pressvorgang werden die Pressformen wieder geöffnet, indem die Formendeckel 39 von den Kassettenformen 29 abgenommen werden. Dadurch, dass die Kassettenformen 29 die Negativform der wannenartigen Vertiefungen 15 aufweisen, werden die wannenartigen Vertiefungen 15 beim Pressvorgang in die Trockenmörtelplatte 1 eingebracht, insbesondere eingedrückt.

Nun werden Trockenmörtelplatten 1 entformt und anschließend in der Abkühleinrichtung 26 abgekühlt. Die Trockenmörtelplatten 1 kühlen derart ab, dass das Klebemittel erhärtet und die verfestigte, erhärtete Feststoff-Klebematrix ausbildet.

Mittels der vorzugsweise vorhandenen Kontrolleinrichtung werden noch beispielsweise das Gewicht und/oder die Oberfläche und/oder die Bruchfreiheit kontrolliert. Und mittels der Verpackeinrichtung 27 werden die Trockenmörtelplatten 1 noch vorzugsweise in eine Kartonschale gepackt und mit einer Folie 41 umhüllt oder in einen Tiefziehbeutel gepackt. Die Folie 41 bzw. der Tiefziehbeutel wird vorzugsweise anschließend evakuiert, so dass die Pakete aus Trockenmörtelplatten 1 vakuumverpackt sind. Danach werden die Pakete aufeinander gestapelt.

Das erfindungsgemäße Verfahren kann dabei z.B. derart realisiert werden, dass sich die einzelnen Einrichtungen 22;23;24, insbesondere beim Aufstreuen und Ablegen, relativ zu den Kassettenformen 29 bewegen und die Kassettenformen 29 ruhen. Allerdings kann dies auch umgekehrt sein oder eine überlagerte Relativbewegung stattfinden.

Wie bereits erläutert, werden die erfindungsgemäßen Trockenmörtelplatten 1 vorzugsweise zur Herstellung einer Frischmörtelschicht 45 zur deckelnden Dünnbettvermörtelung von Hochlochziegeln 46 oder anderen Wandbildnern verwendet. Dazu werden die einzelnen Trockenmörtelplatten 1 in einer Reihe auf eine erste, untere Ziegelreihe 47 aufgelegt. Die erste Hochlochziegelreihe 47 besteht in an sich bekannter Weise aus Hochlochziegeln 46, die unter Ausbildung jeweils einer Stoßfuge 48 auf Stoß aneinander gesetzt sind. Auf die erste Ziegelreihe 47 werden die Trockenmörtelplatten 1 aufgelegt und dabei ebenfalls vorzugsweise mit ihren Plattenstirnkanten 12 auf Stoß, unter Ausbildung einer Stoßfuge 49, aneinander gesetzt. Des Weiteren werden die Trockenmörtelplatten 1 so aufgelegt, dass die profilierte Plattenoberseite 13a nach oben weist. Außerdem werden die Trockenmörtelplatten 1 vorzugsweise so aufgelegt, dass die Stoßfugen 49 zwischen den Trockenmörtelplatten 1 zu den Stoßfugen 48 zwischen den Hochlochziegeln 46 der ersten Ziegelreihe 47 in vertikaler Richtung versetzt sind.

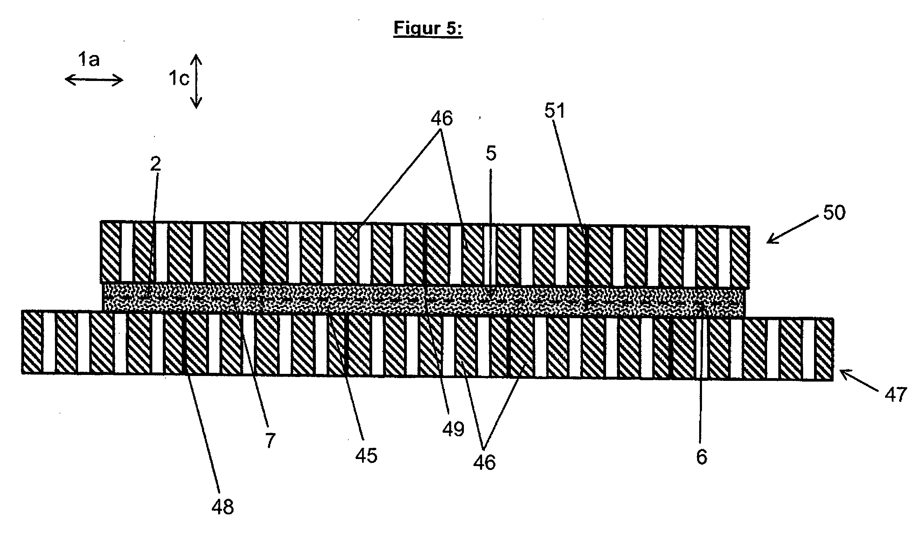

Nach dem Auflegen der Trockenmörtelplatten 1 werden diese, z.B. mit einer Gießkanne, bewässert. Dabei werden die wannenartigen Vertiefungen 15 mit Wasser aufgefüllt. Überschüssiges Wasser fließt über die wannenartigen Vertiefungen 15 über und ab. Dadurch ist sichergestellt, dass genau die richtige Menge zur Bewässerung der Trockenmörtelplatten 1 zur Verfügung steht. Das Wasser sickert in die Trockenmörtelplatten 1 ein, fließt durch das wasserdurchlässige Trägerband 2 durch, benetzt die einzelnen Bestandteile der Trockenmörtelmischungen und löst nach und nach das Klebemittel auf, so dass aus den Trockenmörtelplatten 1 jeweils einzelne, bewehrte Frischmörtelschichten entstehen. Die einzelnen, zueinander benachbarten Frischmörtelschichten grenzen dabei direkt aneinander an und gehen dadurch ineinander über, so dass sich eine durchgehende Frischmortetschicht 45 ausbildet (Fig. 5). Durch den erfindungsgemäß hohen Anteil an Leichtzuschlag wird dabei trotz verdichtung sichergestellt, dass das Wasser schnell durch die gesamte Trockenmörtelplatte 1 durchfließt und alle Bestandteile ausreichend benetzt werden.

Nach dem Bewässern wird eine zweite Ziegelreihe 50 auf die Frischmörtelschicht 45 aufgelegt und vorzugsweise mit einigen Hammerschlägen fixiert. Dabei werden die einzelnen Hochlochziegel 46 wiederum auf Stoß, unter Ausbildung einer Stoßfuge 51, aneinander gesetzt. Die Hochlochziegel 46 werden zudem vorzugsweise so aufgelegt, dass die Stoßfugen 49 zwischen den Trockenmörtelplatten 1 (in Fig. 5 noch gestrichelt angedeutet) mit den Stoßfugen 51 zwischen den Hochlochziegeln 46 der zweiten Ziegelreihe 50 in vertikaler Richtung fluchten. Die Länge der Trockenmörtelplatten 1 entspricht somit der Länge der Hochlochziegel 46. Durch das Aufsetzen und Eindrücken der Hochlochziegel 46 auf bzw. in die Frischmörtetschicht 45 werden die einzelnen, zueinander benachbarten Frischmörtelschichten weiter miteinander vermischt.

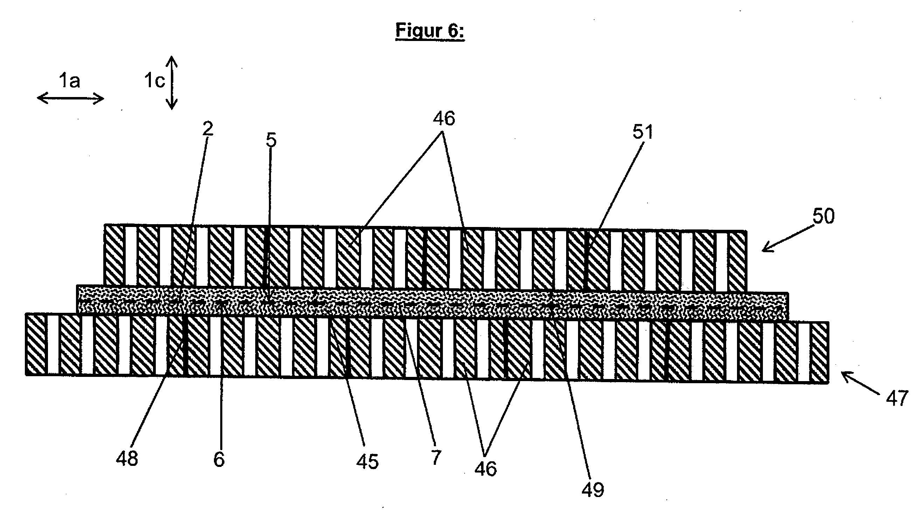

Nach einer weiteren Ausführungsform der Erfindung (Fig. 6) sind die Trockenmörtelplatten 1 länger als die Hochlochziegel 46. Dadurch sind die Stoßfugen 48;49;51 versetzt zueinander. Dadurch wird die Gesamtstabilität des Mauerwerks erhöht.

Wie bereits oben erläutert, wurde im Rahmen der Erfindung überraschenderweise herausgefunden, dass es möglich ist durch einen sehr hohen Anteil an offen- und geschlossenporigem Leichtzuschlag die Festigkeit und Abriebfestigkeit der erfindungsgemäßen Trockenmörtelplatte deutlich zu verbessern. Dies war nicht ohne weiteres zu erwarten. Denn die offen- bzw. geschlossenporigen Leichtzuschlagkörner des Leichtzuschlages weisen bekanntermaßen sehr geringe Korndruckfestigkeiten auf. Somit wären eigentlich hoher Abrieb und verschlechterte Festigkeitseigenschaften zu erwarten gewesen. Dies könnte daran liegen, dass das flüssige, aufgeschmolzene Klebemittel, insbesondere aufgrund des gleichzeitig aufgebrachten Druckes, in die Poren der Leichtzuschlägkörner eindringt und nach dem Erkalten in diesen mechanisch verkrallt ist. Dadurch wird der Zusammenhalt der einzelnen Bestandteile der Trockenmörtelmischung deutlich verbessert, was zu den guten Festigkeitseigenschaften und dem geringen Abrieb der erfindungsgemäßen Trockenmörtelplatte führt.

Zudem werden durch den hohen Anteil an Leichtzuschlag überraschenderweise auch die Festigkeitseigenschaften der aus den Trockenmörtelplatten hergestellten Festmörtelschicht verbessert. Denn aufgrund des durch den Leichtzuschlag erzeugten Porenraums, kann das Wasser ungehindert durch die Trockenmörtelplatte durchfließen und alle Bestandteile der Trockenmörtelplatte werden ausreichend und gleichmäßig benetzt. Dabei ist viel weniger Wasser notwendig als bei dem bekannten Mörtelband. Denn dieses weist ein viel dichteres Gefüge auf. Dadurch kann nur mit einer überhöhten Wassermenge gewährleistet werden, dass alle Bestandteile benetzt werden. Bei der erfindungsgemäßen Trockenmörtelplatte ist der w/z-Wert, der wiederum durch die wannenartigen Vertiefungen vorgegeben wird, deutlich geringer. Außerdem ist das Wasser gleichmäßig in dem Frischmörtel verteilt. Dies alles führt zu einer verbesserten Festigkeit der späteren Trockenmörtelschicht und zu geringerem Schwinden bei der Hydratation. Durch die durch die wannenartigen Vertiefungen erzeugten Randbereiche, wird zudem das Abbröckeln verringert. Außerdem ist es auch niedriger qualifizierten Kräften möglich, das System anzuwenden, da die Dosiermenge des Wassers vorgegeben ist.

Weitere Vorteile der erfindungsgemäßen Trockenmörtelplätten sind Staubfreiheit bei der Anwendung auf der Baustelle, Umweltschonung durch gezielteren Energie und Ressourceneinsatz. Vorteilhaft ist auch das einfache Handling, da jeweils ein passendes Format zum jeweiligen Wandbildner bereitgestellt werden kann. Dadurch ist der Zuschnitt geringer.

Wie bereits erläutert, führt beim erfindungsgemäßen Verfahren das gleichzeitige Aufbringen von Druck und Temperatur auf die trockenen Mischungen dazu, dass das Klebemittel in die offenen Poren der Leichtzuschlagkörner eindringt. Dabei darf der Druck nicht zu hoch sein, damit die Leichtzuschlagkörner nicht zerstört werden.

Im Rahmen der Erfindung liegt es dabei auch, die erfindungsgemäßen Trockenmörtelplatten 1 zum Befestigen von Fliesen oder ähnlichen Platten oder zum Befestigen von Dämmplatten oder ähnlichen Fassadenelementen zu verwenden oder zum Erzeugen einer Wand ohne zusätzlichen Wandbildner.

Zudem liegt es im Rahmen der Erfindung, die Trockenmörtelplatte als mehrschichtige Trockenmörtelplatte mit mehr als zwei Trockenmörteldeckschichten oder als einschichtige Trockenmörtelplätte nur mit einer Trockenmörteldeckschicht herzustellen. Im letzteren Fall wird keine zweite trockene Mischung auf das Trägerband aufgebracht und die zweite Mörtelauftrageinrichtung entfällt. Bei einer mehrschichtigen Trockenmörtelplatte wird entsprechend die entsprechende Anzahl an ersten bzw. zweiten trockenen Mischungen aufgebracht, wobei diese Mischungen unterschiedlich sein können. Auch kann die Trockenmörtelplatte mehrere Trägerbänder aufweisen. Die Herstellung erfolgt analog, in dem abwechselnd die jeweilige Anzahl an trockenen Mischungen und ein Trägerband in die Kassettenformen eingebracht werden.

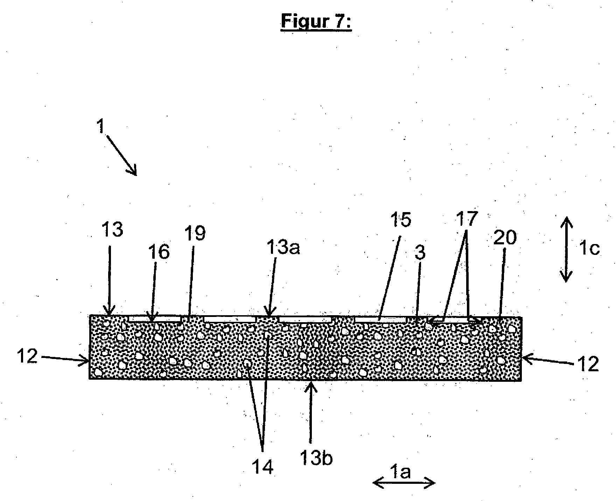

Des Weiteren kann das Trägerband als Bewehrungsmittel auch ganz entfallen. Die Trockenmörtelplatte 1 ist dann z.B. einschichtig aufgebaut und besteht aus einer einzigen Trockenmörtelschicht 3 (Fig. 7). Vorzugsweise weist die Trockenmörtelschicht 3 in diesem Fall eine Bewehrung in Form von Einzelfasern auf, die in der Trockenmörtelschicht 3 verteilt sind. Die Herstellung erfolgt wie oben beschrieben, mit dem Unterschied, dass kein Trägerband auf die erste trockene Mischung aufgelegt wird. Auch kann die Trockenmörtelplatte ohne Trägerband mehrschichtig ausgebildet sein, also aus mehreren übereinander angeordneten, miteinander mittels des Klebemittels verbundenen, Trockenmörtelschichten bestehen (nicht dargestellt). Die dafür notwendigen trockenen Mischungen werden nach und nach in die Kassettenformen eingestreut.

## Patentansprüche

1. Trockenmörtelplatte (1) aufweisend zumindest eine Trockenmörtelschicht (3), wobei die Trockenmörtelschicht (3) eine mittels eines wasserlöslichen Klebemittels verfestigte Trockenmörtelmischung aufweist, wobei die Trockenmörtelmischung aus einem mineralischen, insbesondere hydraulischen, Bindemittel, Zuschlag und gegebenenfalls zumindest einem Zusatzstoff und/oder zumindest einem Zusatzmittel besteht,
**dadurch gekennzeichnet, dass**
die Trockenmörtelmischung bezogen auf die Trockenmasse der Trockenmörtelmischung 5 bis 35 Gew.%, bevorzugt 10 bis 25Gew.%, Leichtzuschlag aus offenporigen und geschlossenporigen Leichtzuschlagkörnern (14) aufweist.

2. Trockenmörtelplatte (1) nach Anspruch 1,
**dadurch gekennzeichnet, dass**
die Trockenmörtelschicht (3) eine Feststoff-Klebematrix aus dem wasserlöslichen Klebemittel aufweist, welche die Bestandteile der Trockenmörtelmischung miteinander verbindet.

3. Trockenmörtelplatte (1) nach einem der vorhergehenden Ansprüche,
**dadurch gekennzeichnet, dass**
es sich bei dem offenporigen oder geschlossenporigen Leichtzuschlag um Perlit oder Vermiculit oder Blähglas oder Hydrosilikate oder Blähton oder Mischungen aus den vorgenannten Leichtzuschlagstoffen handelt.

4. Trockenmörtelplatte (1) nach einem der vorhergehenden Ansprüche,
**dadurch gekennzeichnet, dass**
der Anteil an geschlossenporigem Leichtzuschlag, insbesondere Blähglas, bezogen auf die Trockenmasse der Trockenmörtelmischung 1 bis 20 Gew.%, bevorzugt 5 bis 15 Gew.%, beträgt.

5. Trockenmörtelplatte (1) nach einem der vorhergehenden Ansprüche,
**dadurch gekennzeichnet, dass**
die offenporigen Leichtzuschlagkörner (14) eine Korndruckfestigkeit von 0,01 bis 2 N/mm², bevorzugt 0,01 bis 1 N/mm², aufweisen und/oder die geschlossenporigen Leichtzuschlagkörner (14) eine Korndruckfestigkeit von 2 bis 7 N/mm² aufweisen.

6. Trockenmörtelplatte (1) nach einem der vorhergehenden Ansprüche,
**dadurch gekennzeichnet, dass**
das Klebemittel in die Leichtzuschlagkörner (14) eingedrungen ist.

7. Trockenmörtelplatte (1) nach einem der vorhergehenden Ansprüche,
**dadurch gekennzeichnet, dass**
die Trockenmörtelplatte (1) ein Trägerband (2) aufweist, das einseitig mit zumindest einer Trockenmörtelschicht (3) gemäß einem der vorhergelenden Ansprüche abgedeckt ist,
wobei vorzugsweise das Trägerband (2) beidseits mit zumindest einer Trockenmörteischicht (3;4) gemäß einem der vorhergehenden Ansprüche abgedeckt ist, wobei die Trockenmörtelschichten (3;4) vorzugsweise in eine Plattenhöhenrichtung (1c) zueinander fluchtend angeordnet sind.

8. Trockenmörtelplatte (1) nach Anspruch 7,
**dadurch gekennzeichnet, dass**
die Feststoff-Klebematrix jeweils die Bestandteile der Trockenmörtelmischung(en) miteinander und mit dem Trägerband (2) verbindet.

9. Trockenmörtelplatte (1), insbesondere nach einem der vorhergehenden Ansprüche, aufweisend zumindest eine Trockenmörtelschicht (3), wobei die Trockenmörtelschicht (3) eine mittels eines wasserlöslichen Klebemittels verfestigte Trockenmörtelmischung aufweist, wobei die Trockenmörtelmischung aus einem mineralischen, insbesondere hydraulischen, Bindemittel, Zuschlag und gegebenenfalls zumindest einem Zusatzstoff und/oder zumindest einem Zusatzmittel besteht, und wobei die Trockenmörtelplatte (1) eine Schichtoberseite (8) aufweist, die eine Plattenoberseite (13a) der Trockenmörtelplatte (1) bildet
**dadurch gekennzeichnet, dass**
in der Plattenoberseite (13a) zumindest eine wannenartige Vertiefung (15) zur Aufnahme von Wasser vorhanden ist,
wobei vorzugsweise mehrere, zueinander in eine Plattenlärigsrichtung (1a) benachbarte, wannenartige Vertiefungen (15) vorhanden sind, wobei zwischen je zwei wannenartigen Vertiefungen (15) eine Zwischenstegwandung (19) vorhanden ist und eine umlaufende Randstegwandung (20) vorhanden ist, die alle wannenartigen Vertiefungen (15) umgibt.

10. Verfahren zur Herstellung einer Trockenmörtelplatte (1) nach einem der vorhergehenden Ansprüche, mit folgenden Verfahrensschritten:
a) Einbringen zumindest einer trockenen Mischung (28) aus der Trockenmörtelmischung und dem Klebemittel in eine nach oben offene Kassettenform (29),
b) Vorzugsweise Auflegen des Trägerbandes (2) auf die oberste der trockenen Mischungen (28),
c) Vorzugsweise Aufbringen zumindest einer weiteren trockenen Mischung (36) aus der Trockenmörtelmischung und dem Klebemittel auf das Trägerband (2),
d) Gegebenenfalls zumindest einmaliges Wiederholen der Schritte b) und c),
e) Gleichzeitiges Beaufschlagen der Mischung(en) (28;36) mit Druck und Temperatur, so dass das Klebemittel aufgeschmolzen wird und in die Leichtzuschlagkörner (14) eindringt,
f) Abkühlen und Erhärten lassen des Klebemittels.

11. Verfahren zur Herstellung einer Trockenmörtelplatte (1) nach Anspruch 10, mit folgenden Verfährensschritten:
a) Einbringen einer ersten trockenen Mischung (28) in die nach oben offene Kassettenform (29), wobei die erste trockene Mischung (28) die Trockenmörtelmischung und das Klebemittel zur Herstellung der ersten Trockenmörtelschicht (3) aufweist,
b) Auflegen des Trägerbandes (2) auf die erste trockene Mischung (28),
c) Vorzugsweise Aufbringen einer zweiten trockenen Mischung (36) auf das Trägerband (2), wobei die zweite trockene Mischung (36) die Trockenmörtelmischüng und das Klebemittel zur Herstellung der zweiten Trockenmörtelschicht (4) aufweist,
d) Gleichzeitiges Beaufschlagen der Mischung(en) (28;36) und gegebenenfalls des Trägerbandes (2) mit Druck und Temperatur, so dass das Klebemittel aufgeschmolzen wird und in die Leichtzuschlagkörner (14) eindringt,
e) Abkühlen und Erhärten lassen des Klebemittels.

12. Verfahren nach Anspruch 10 oder 11,
**dadurch gekennzeichnet, dass**
eine trockene Mischung (28;36) in der Summe jeweils 30-60 Vol.%, bevorzugt 35-50 Vol.%, offen- und geschlossenporigen Leichtzuschlag aufweist,
wobei vorzugsweise eine trockene Mischung (28;36) jeweils folgende Zusammensetzung aufweist:
| | | **insbesondere** |
|---|---|---|
| | **[Vol. %]** | **[Vol.%]** |
| **Mineralisches Bindemittel, insbesondere Portlandzement und/oder Kalkhydrat** | 30-60 | 35-50 |
| **Offen- und geschlossenporiger Leichtzuschlag** | 20-60 | 30-50 |
| **Weitere Zuschlagstoffe, z.B. Natur und Brechsande** | 0-10 | 0-5 |
| **Zusatzstoffe, z.B. Kalksteinmehl und/oder Flugasche und/oder Fasern** | 0-10 | 0-4 |
| **Zusatzmittel, z.B. Wasserrückhaltemittel, Polysaccharid Verdicker, Eutektikbildner wie z.B. Acetate und andere Salze** | 0-10 | 0-6,5 |
| **Klebemittel, z**.**B**. **Harnstoff, Zucker, Stärken, thermoplastische Polymere** | 5-30 | 10-20 |

13. Verfahren nach einem der Ansprüche 10 bis 12,
**dadurch gekennzeichnet, dass**
der offen- und geschlossenporige Leichtzuschlag einer trockenen Mischung (28;36) jeweils folgende Korngrößenverteilung aufweist (die einzelnen Komponenten addieren sich zu 100 Ges.%):
| | **Anteil bezogen auf gesamten Gehalt an offen- und geschlossenporigem Leichtzuschlag in der Trockenmörtelmischung** | |
|---|---|---|
| | **[Gew.%]** | |
| | | **vorzugsweise** |
| **≤ 0,09 mm** | 0-20 | 0-15 |
| **> 0,09 = 0,2 mm** | 0-20 | 0-10 |
| **> 0,2 - 0,63 mm** | 0-100 | 70-95 |
| **> 0,63 - 1,0 mm** | 0-100 | 5-30 |
| **> 1,0 - 2,0 mm** | 0-20 | 0-10 |
oder
| | **Anteil bezogen auf gesamten Gehalt an offen- und geschlossenporigem Leichtzuschlag in der Trockenmörtelmischung** | |
|---|---|---|
| | **[Gew.%]** | |
| | | **vorzugsweise** |
| **≤ 0,09 mm** | 0-10 | 0-5 |
| **> 0,09 - 0,2 mm** | 0-10 | 0-5 |
| **> 0,2 - 0,63 mm** | 0-20 | 0-5 |
| **> 0,63 - 1,0 mm** | 0-100 | 70-95 |
| **> 1,0 - 2,0 mm** | 0-100 | 5-30 |
| **> 2,0 - 4 mm** | 0-10 | 0-5 |

14. Verfahren nach einem der Ansprüche 10 bis 13,
**dadurch gekennzeichnet, dass**
eine trockene Mischung (28;36) jeweils folgende Sieblinie: (angegeben ist der Siebrückstand) aufweist:
| | **Anteil bezogen auf die gesamte Trockenmasse der trockenen Mischung [Gew.%]** | |
|---|---|---|
| | | **insbesondere** |
| **> 0,09 mm** | 5-50 | 10-30 |
| **> 0,2 mm** | 5-50 | 10-25 |
| **> 0,63 mm** | 0-10 | 0-5 |
| **> 1,0 mm** | 0-10 | 0-5 |
oder
| | **Anteil bezogen auf die gesamte Trockenmasse der trockenen Mischung [Gew.%]** | |
|---|---|---|
| | | **insbesondere** |
| **> 0,09 mm** | 5-50 | 10-30 |
| **> 0,2 mm** | 5-50 | 5-25 |
| **> 0,63 mm** | 0-25 | 5-25 |
| **> 1,0 mm** | 0-20 | 0-10 |
| **> 2,0 mm** | 0-10 | 0-5 |

15. Verfahren nach einem der Ansprüche 10 bis 14 durchgeführt in einer Vorrichtung aufweisend:
a) Zumindest eine nach oben offene Kassettenform (29),
b) Eine erste Mörtelauftrageinrichtung (22) zum Einbringen der ersten trockenen Mischung (28) in die nach oben offene Kassettenform (29),
c) Vorzugsweise eine Trägerbandauftegeeinrichtung (23) zum Auflegen des Trägerbandes (2) auf die erste trockene Mischung (28),
d) Vorzugsweise eine zweite Mörtetauftrageinrichtung (24) zum Aufbringen der zweiten trockenen Mischung (36) auf das Trägerband (2) oder die erste trockene Mischung (28),
e) Eine Presseinrichtung (25) zum gleichzeitigen Beaufschlagen der trockenen Mischung(en) (28;36) und gegebenenfalls des Trägerbandes (2) mit Druck und Temperatur, so dass das Klebemittel aufgeschmolzen wird und in die Leichtzuschlagkörner (14) eindringt,
f) Eine Abkühlstrecke (26) zum Abkühlen und Erhärten lassen des Klebemittels,
wobei vorzugsweise die Presseinrichtung (25) einen zur Kassettenform (29) korrespondierenden Formendeckel (39) aufweist, wobei die Kassettenform (29) und der Formendeckel (39) jeweils eine Antihaftbeschichtung, insbesondere aus elastischem Kunststoffmaterial, bevorzugt aus Silikon oder Polyurethan oder Teflon aufweisen.

## Claims

1. Dry mortar panel (1) having at least one dry mortar layer (3), wherein the dry mortar layer (3) comprises a dry mortar mixture solidified by means of a water-soluble adhesive agent, wherein the dry mortar mixture consists of a mineral, in particular hydraulic, binder, aggregate and optionally at least one admixture and/or at least one additive,
**characterized in that**
the dry mortar mixture comprises, based on the dry matter of the dry mortar mixture, 5 to 35% by weight, preferably 10 to 25% by weight, lightweight aggregate composed of open-pore and closed-pore lightweight aggregate particles (14).

2. Dry mortar panel (1) according to claim 1,
**characterized in that**
the dry mortar layer (3) comprises a solid adhesive matrix of the water-soluble adhesive agent, which bonds the constituents of the dry mortar mixture to one another.

3. Dry mortar panel (1) according to any one of the preceding claims,
**characterized in that**
the open-pore or closed-pore lightweight aggregate is perlite or vermiculite or expanded glass or hydrosilicates or expanded clay or mixtures of the aforementioned lightweight aggregates.

4. Dry mortar panel (1) according to any one of the preceding claims,
**characterized in that**
the proportion of closed-pore lightweight aggregate, in particular expanded glass, based on the dry matter of the dry mortar mixture is 1 to 20% by weight, preferably 5 to 15% by weight.

5. Dry mortar panel (1) according to any one of the preceding claims,
**characterized in that**
the open-pore lightweight aggregate particles (14) have a particle compressive strength of 0.01 to 2 N/mm², preferably 0.01 to 1 N/mm², and/or the closed-pore lightweight aggregate particles (14) have a particle compressive strength of 2 to 7 N/mm².

6. Dry mortar panel (1) according to any one of the preceding claims,
**characterized in that**
the adhesive agent penetrated into the lightweight aggregate particles (14).

7. Dry mortar panel (1) according to any one of the preceding claims,
**characterized in that**
the dry mortar panel (1) has a carrier strip (2) which is covered on one side with at least one dry mortar layer (3) according to any one of the preceding claims,
wherein preferably the carrier strip (2) is covered on both sides with at least one dry mortar layer (3;4) according to any one of the preceding claims, wherein the dry mortar layers (3;4) are preferably arranged flush with one another in a panel height direction (1c).

8. Dry mortar panel (1) according to claim 7,
**characterized in that**
the solid adhesive matrix in each case bonds the constituents of the dry mortar mixture(s) to one another and to the carrier strip (2).

9. Dry mortar panel (1), in particular according to any one of the preceding claims, having at least one dry mortar layer (3), wherein the dry mortar layer (3) comprises a dry mortar mixture solidified by means of a water-soluble adhesive agent, wherein the dry mortar mixture consists of a mineral, in particular hydraulic, binder, aggregate and optionally at least one admixture and/or at least one additive, and wherein the dry mortar panel (1) has a layer upper side (8) which forms a panel upper side (13a) of the dry mortar panel (1),
**characterized in that**
at least one trough-like depression (15) for holding water is present in the panel upper side (13a),
wherein preferably a plurality of trough-like depressions (15) are present which are adjacent to one another in a panel length direction (1a), wherein an intermediate web wall (19) is present between each two trough-like depressions (15) and a peripheral boundary web wall (20) is present which surrounds all trough-like depressions (15).

10. Method for producing a dry mortar panel (1) according to any one of the preceding claims, having the following method steps:
a) introducing at least one dry mixture (28) composed of the dry mortar mixture and the adhesive agent into a cassette mould (29) which is open at the top,
b) preferably placing the carrier strip (2) onto the uppermost of the dry mixtures (28),
c) preferably applying to the carrier strip (2) at least one further dry mixture (36) composed of the dry mortar mixture and the adhesive agent,
d) optionally repeating steps b) and c) at least once,
e) simultaneously subjecting the mixture(s) (28;36) to pressure and temperature so that the adhesive agent melts and penetrates into the lightweight aggregate particles (14),
f) cooling and allowing the adhesive agent to harden.

11. Method for producing a dry mortar panel (1) according to claim 10, having the following method steps:
a) introducing a first dry mixture (28) into the cassette mould (29) which is open at the top, wherein the first dry mixture (28) comprises the dry mortar mixture and the adhesive agent for producing the first dry mortar layer (3),
b) placing the carrier strip (2) onto the first dry mixture (28),
c) preferably applying to the carrier strip (2) a second dry mixture (36), wherein the second dry mixture (36) comprises the dry mortar mixture and the adhesive agent for producing the second dry mortar layer (4),
d) simultaneously subjecting the mixture(s) (28;36) and optionally the carrier strip (2) to pressure and temperature so that the adhesive agent melts and penetrates into the lightweight aggregate particles (14),
e) cooling and allowing the adhesive agent to harden.

12. Method according to claim 10 or 11,
**characterized in that**
a dry mixture (28;36) in total in each case comprises 30-60% by volume, preferably 35-50% by volume, open-pore and closed-pore lightweight aggregate,
wherein preferably a dry mixture (28;36) in each case has the following composition:
| | **[% by volume]** | **in particular [% by volume]** |
|---|---|---|
| **Mineral binder, in particular portland cement and/or calcium hydroxide** | 30-60 | 35-50 |
| **Open-pore and closed-pore lightweight aggregate** | 20-60 | 30-50 |
| **Further aggregate materials, for example natural sand and crushed sand** | 0-10 | 0-5 |
| **Admixtures, for example limestone powder and/or fly ash and/or fibres** | 0-10 | 0-4 |
| **Additives, for example water-retaining agents, polysaccharide, thickeners, eutectic-forming agents such as for example acetates and other salts** | 0-10 | 0-6.5 |
| **Adhesive agents, for example urea, sugar, starches, thermoplastic polymers** | 5-30 | 10-20 |

13. Method according to any one of claims 10 to 12,
**characterized in that**
the open-pore and closed-pore lightweight aggregate of a dry mixture (28;36) in each case has the following particle size distribution (the individual components add up to 100% by weight):
| | **Proportion based on the total content of open-pore and closed-pore lightweight aggregate in the dry mortar mixture [% by weight]** | |
|---|---|---|
| | | **preferably** |
| **≤ 0.09 mm** | 0-20 | 0-15 |
| **> 0.09 - 0.2 mm** | 0-20 | 0-10 |
| **> 0.2 - 0.63 mm** | 0-100 | 70-95 |
| **> 0.63** - **1.0 mm** | 0-100 | 5-30 |
| **> 1.0** - **2.0 mm** | 0-20 | 0-10 |
or
| | **Proportion based on the total content of open-pore and closed-pore lightweight aggregate in the dry mortar mixture [% by weight]** | |
|---|---|---|
| | | **preferably** |
| **≤ 0.09 mm** | 0-10 | 0-5 |
| **> 0.09 - 0.2 mm** | 0-10 | 0-5 |
| **> 0.2 - 0.63 mm** | 0-20 | 0-5 |
| **> 0.63 - 1.0 mm** | 0-100 | 70-95 |
| **> 1.0 - 2.0 mm** | 0-100 | 5-30 |
| **> 2.0 - 4 mm** | 0-10 | 0-5 |

14. Method according to any one of claims 10 to 13,
**characterized in that**
a dry mixture (28;36) in each case has the following grading curve (the screening residue is specified):
| | **Proportion based on the total dry matter of the dry mixture** | |
|---|---|---|
| | **[% by weight]** | |
| | | **in particular** |
| **> 0.09 mm** | 5-50 | 10-30 |
| **> 0.2 mm** | 5-50 | 10-25 |
| **> 0.63 mm** | 0-10 | 0-5 |
| **> 1.0 mm** | 0-10 | 0-5 |
or
| | **Proportion based on the total dry matter of the dry mixture** | |
|---|---|---|
| | **[% by weight]** | |
| | | **in particular** |
| **> 0.09 mm** | 5-50 | 10-30 |
| **> 0.2 mm** | 5-50 | 5-25 |
| **> 0.63 mm** | 0-25 | 5-25 |
| **> 1.0 mm** | 0-20 | 0-10 |
| **> 2.0 mm** | 0-10 | 0-5 |

15. Method according to any one of claims 10 to 14 carried out in an apparatus comprising:
a) at least one cassette mould (29) which is open at the top,
b) a first mortar application device (22) for introducing the first dry mixture (28) into the cassette mould (29) which is open at the top,
c) preferably a carrier strip placement device (23) for placing the carrier strip (2) onto the first dry mixture (28),
d) preferably a second mortar application device (24) for applying the second dry mixture (36) to the carrier strip (2) or the first dry mixture (28),
e) a pressing device (25) for simultaneously subjecting the dry mixture(s) (28;36) and optionally the carrier strip (2) to pressure and temperature so that the adhesive agent melts and penetrates into the lightweight aggregate particles (14),
f) a cooling section (26) for cooling and allowing the adhesive agent to harden,
wherein preferably the pressing device (25) comprises a mould cover (39) corresponding to the cassette mould (29), wherein the cassette mould (29) and the mould cover (39) in each case have an anti-adhesion coating, in particular consisting of elastic plastic material, preferably consisting of silicone or polyurethane or Teflon.

## Revendications

1. Plaque de mortier sec (1) présentant au moins une couche de mortier sec (3), dans laquelle la couche de mortier sec (3) présente un mélange de mortier sec solidifié au moyen d'un adhésif soluble dans l'eau, dans laquelle le mélange de mortier sec est constitué d'un liant minéral, en particulier d'un liant hydraulique, d'un granulat, et, éventuellement au moins d'un adjuvant et/ou au moins d'un additif,
**caractérisée en ce que**
le mélange de mortier sec présente, par rapport à la masse sèche du mélange de mortier sec, 5 à 35 % en poids, de manière préférée 10 à 25 % en poids, d'un granulat léger (14) composé de grains de granulat léger à pores ouverts et à pores fermés.

2. Plaque de mortier sec (1) selon la revendication 1,
**caractérisée en ce que**
la couche de mortier sec (3) présente une matrice adhésive de matière solide composée d'un adhésif soluble dans l'eau, laquelle relie les constituants du mélange de mortier sec.

3. Plaque de mortier sec (1) selon l'une quelconque des revendications précédentes,
**caractérisée en ce que**
le granulat léger à pores ouverts ou à pores fermés est de la perlite ou de la vermiculite ou du verre expansé ou des hydrosilicates ou de l'argile expansée ou des mélanges composés des agrégats légers évoqués plus haut.

4. Plaque de mortier sec (1) selon l'une quelconque des revendications précédentes,
**caractérisée en ce que**
la proportion en granulat léger à pores fermés, en particulier en verre expansé, par rapport à la masse sèche du mélange de mortier sec va de 1 à 20 % en poids, de manière préférée de 5 à 15 % en poids.

5. Plaque de mortier sec (1) selon l'une quelconque des revendications précédentes,
**caractérisée en ce que**
les grains de granulat léger (14) à pores ouverts présentent une résistance à la compression des grains allant de 0,01 à 2 N/mm², de manière préférée de 0,01 à 1 N/mm², et/ou **en ce que** les grains de granulat léger (14) à pores fermés présentent une résistance à la compression des grains allant de 2 à 7 N/mm².

6. Plaque de mortier sec (1) selon l'une quelconque des revendications précédentes,
**caractérisée en ce que**
l'adhésif a pénétré dans les grains de granulat léger (14).

7. Plaque de mortier sec (1) selon l'une quelconque des revendications précédentes,
**caractérisée en ce que**
la plaque de mortier sec (1) présente une bande de support (2), qui est recouverte d'un côté d'au moins une couche de mortier sec (3) selon l'une quelconque des revendications précédentes,
dans laquelle de préférence la bande de support (2) est recouverte des deux côtés d'au moins une couche de mortier sec (3 ; 4) selon l'une quelconque des revendications précédentes, dans laquelle les couches de mortier sec (3 ; 4) sont disposées de préférence selon une direction en hauteur des plaques (1c) en alignement les unes par rapport aux autres.

8. Plaque de mortier sec (1) selon la revendication 7,
**caractérisée en ce que**
la matrice adhésive de matière solide relie respectivement les constituants du/des mélange(s) de mortier sec les uns aux autres et à la bande de support (2).

9. Plaque de mortier sec (1), en particulier selon l'une quelconque des revendications précédentes, présentant au moins une couche de mortier sec (3), dans laquelle la couche de mortier sec (3) présente un mélange de mortier sec solidifié au moyen d'un adhésif soluble dans l'eau, dans laquelle le mélange de mortier sec est constitué d'un liant minéral, en particulier d'un liant hydraulique, d'un granulat et, éventuellement, d'au moins un adjuvant et/ou au moins d'un additif, et dans laquelle la plaque de mortier sec (1) présente une face supérieure de couche (8), qui forme une face supérieure de plaque (13a) de la plaque de mortier sec (1),
**caractérisée en ce que**
au moins un renfoncement (15) de type cuvette servant à recevoir de l'eau est présent dans la face supérieure de plaque (13a),
dans laquelle de préférence plusieurs renfoncements (15) de type cuvette, adjacents les uns aux autres dans un sens de la longueur des plaques (1a) sont présents, dans laquelle une paroi d'entretoise intermédiaire (19) est présente entre respectivement deux renfoncements (15) de type cuvette et une paroi d'entretoise de bordure (20) périphérique est présente, laquelle entoure tous les renfoncements (15) de type cuvette.

10. Procédé servant à fabriquer une plaque de mortier sec (1) selon l'une quelconque des revendications précédentes, comprenant les étapes de procédé qui suivent consistant à :
a) introduire au moins un mélange (28) sec composé du mélange de mortier sec et de l'adhésif dans un moule à cassette (29) ouvert vers le haut ;
b) positionner de préférence la bande de support (2) sur le dessus des mélanges (28) secs ;
c) appliquer de préférence au moins un autre mélange (36) sec composé du mélange de mortier sec et de l'adhésif sur la bande de support (2) ;
d) éventuellement répéter au moins une fois les étapes b) et c) ;
e) soumettre de manière simultanée le/les mélange(s) (28 ; 36) à l'action d'une pression et d'une température de manière à ce que l'adhésif soit fondu et pénètre dans les grains de granulat léger (14) ;
f) faire refroidir et faire durcir l'adhésif.

11. Procédé servant à fabriquer une plaque de mortier sec (1) selon la revendication 10, comprenant les étapes de procédé qui suivent :
a) introduire un premier mélange (28) sec dans le moule à cassette (29) ouvert vers le haut, dans lequel le premier mélange (28) sec consiste à mélanger le mortier sec et l'adhésif afin de fabriquer la première couche de mortier sec (3) ;
b) poser la bande de support (2) sur le premier mélange (28) sec ;
c) appliquer de préférence un deuxième mélange (36) sec sur la bande de support (2), dans lequel le deuxième mélange (36) sec consiste à mélanger le mortier sec et l'adhésif afin de fabriquer la deuxième couche de mortier sec (4) ;
d) soumettre de manière simultanée le/les mélange(s) (28 ; 36), et éventuellement la bande de support (2), à l'action d'une pression et d'une température, de manière à ce que l'adhésif soit fondu et pénètre dans les grains de granulat léger (14) ;
e) faire refroidir et faire durcir l'adhésif.

12. Procédé selon la revendication 10 ou 11,
**caractérisé en ce que**
un mélange sec (28 ; 36) présente de manière cumulée respectivement 30 - 60 % en volume, de préférence 35 - 50 % en volume, d'un granulat léger à pores ouverts et à pores fermés,
dans lequel de préférence un mélange (28 ; 36) sec présente respectivement la composition qui suit :
| | [% en volume] | En particulier [% en volume] |
|---|---|---|
| Liant minéral en particulier ciment Portland et/ou hydrate de chaux | 30 - 60 | 35 - 50 |
| Granulat léger à pores ouverts et à pores fermés | 20 - 60 | 30 - 50 |
| Autres agrégats, par exemple sables naturels et concassés | 0 - 10 | 0 - 5 |
| Adjuvants, par exemple farine de calcaire et/ou cendres volatiles et/ou fibres | 0 - 10 | 0 - 4 |
| Additifs, par exemple agent de rétention d'eau, épaississant polysaccharide, agents complexants eutectiques tels que des acétates et d'autres sels | 0 - 10 | 0 - 6,5 |
| Adhésifs, par exemple urée, sucre, amidons, polymères thermoplastiques | 5 - 30 | 10 - 20 |

13. Procédé selon l'une quelconque des revendications 10 à 12,
**caractérisé en ce que**
le granulat léger à pores ouverts et à pores fermés d'un mélange (28 ; 36) sec présente respectivement une granulométrie qui suit (les différents composants s'additionnent afin d'atteindre 100 % en poids) :
| | Proportion par rapport à la teneur totale en granulat léger à pores ouverts et à pores fermés dans le mélange de mortier sec [% en poids] | |
|---|---|---|
| | | De préférence |
| ≤ 0,09 mm | 0 - 20 | 0 - 15 |
| > 0,09 - 0,2 mm | 0 - 20 | 0 - 10 |
| > 0,2 - 0,63 mm | 0 - 100 | 70 - 95 |
| > 0,63 - 1,0 mm | 0 - 100 | 5 - 30 |
| > 1,0 - 2,0 mm | 0 - 20 | 0 - 10 |
ou
| | Proportion par rapport à la teneur totale en granulat léger à pores ouverts et à pores fermés dans le mélange de mortier sec [% en poids] | |
|---|---|---|
| | | De préférence |
| ≤ 0,09 mm | 0 - 10 | 0 - 5 |
| > 0,09 - 0,2 mm | 0 - 10 | 0 - 5 |
| > 0,2 - 0,63 mm | 0 - 20 | 0 - 5 |
| > 0,63 - 1,0 mm | 0 - 100 | 70 - 95 |
| > 1,0 - 2,0 mm | 0 - 100 | 5 - 30 |
| > 2,0 - 4 mm | 0 - 10 | 0 - 5 |

14. Procédé selon l'une quelconque des revendications 10 à 13,
**caractérisé en ce que**
un mélange sec (28 ; 36) présente respectivement une courbe de tamisage qui suit (est indiqué le refus de criblage) :
| | Proportion par rapport à la masse sèche du mélange sec [% en poids] | |
|---|---|---|
| | | De préférence |
| > 0,09 mm | 5 - 50 | 10 - 30 |
| > 0,2 mm | 5 - 50 | 10 - 25 |
| > 0,63 mm | 0 - 10 | 0 - 5 |
| > 1,0 mm | 0 - 10 | 0 - 5 |
ou
| | Proportion par rapport à la masse sèche du mélange sec [% en poids] | |
|---|---|---|
| | | De préférence |
| > 0,09 mm | 5 - 50 | 10 - 30 |
| > 0,2 mm | 5 - 50 | 5 - 25 |
| > 0,63 mm | 0 - 25 | 5 - 25 |
| > 1,0 mm | 0 - 20 | 0 - 10 |
| > 2,0 mm | 0 - 10 | 0 - 5 |

15. Procédé selon l'une quelconque des revendications 10 à 14, mis en oeuvre dans un dispositif présentant :
a) au moins un moule à cassette (29) ouvert vers le haut ;
b) un premier système d'application de mortier (22) servant à introduire le premier mélange (28) sec dans le moule à cassette (29) ouvert vers le haut ;
c) de préférence un système de pose de bande de support (23) servant à poser la bande de support (2) sur le premier mélange (28) sec ;
d) de préférence un deuxième système d'application de mortier (24) servant à appliquer le deuxième mélange (36) sec sur la bande de support (2) ou sur le premier mélange (28) sec ;
e) un système de pressage (25) servant à soumettre de manière simultanée le/les mélange(s) (28 ; 36) sec(s) et, éventuellement la bande de support (2), à l'action d'une pression et d'une température de sorte que l'adhésif est fondu et pénètre dans les grains de granulat léger (14) ;
f) une ligne de refroidissement (26) servant à faire refroidir et à faire durcir l'adhésif,
dans lequel de préférence le système de pressage (25) présente un couvercle de moule (39) correspondant au moule à cassette (29), dans lequel le moule à cassette (29) et le couvercle de moule (39) présentent respectivement un revêtement anti-adhérent, composé en particulier d'un matériau plastique élastique, de préférence de silicone ou de polyuréthane ou de téflon.
